# EUROPÄISCHE PATENTSCHRIFT

(11) **EP 3 278 628 B1**
(45) Veröffentlichungstag und Bekanntmachung des Hinweises auf die Patenterteilung: **30.10.2019**
(21) Anmeldenummer: 16711539.3
(22) Anmeldetag: 08.03.2016
(51) Int. Cl.: H05B 3/26, F16L 53/00, H05B 3/44, H05B 3/56

(54) **BEHEIZTE MEDIENLEITUNG**
HEATED MEDIA LINE
CONDUITE DE FLUIDE CHAUFFÉE

(30) Priorität: 31.03.2015 DE 102015104947
(43) Veröffentlichungstag der Anmeldung: 07.02.2018
(73) Patentinhaber: Voss Automotive GmbH, 51688 Wipperfürth (DE)
(72) Erfinder: ETSCHEID, Tobias, 51789 Lindlar (DE); ISENBURG, Marco, 40885 Ratingen (DE); ZWILLUS, Christian, 51702 Bergneustadt (DE)
(74) Vertreter: Patent- und Rechtsanwälte Dr. Solf & Zapf
(86) Internationale Anmeldenummer: PCT/EP2016/054857
(87) Internationale Veröffentlichungsnummer: WO 2016/155988

(56) Entgegenhaltungen:
- WO-A1-2013/026560
- DE-A1-102014 012 851
- FR-A- 1 126 046
- US-A- 5 060 287
- US-A1- 2006 289 189

## Beschreibung

Die vorliegende Erfindung betrifft eine beheizte Medienleitung umfassend eine innere rohr- oder schlauchförmige Fluidleitung und mindestens einen an deren Umfang angeordneten elektrischen Heizleiter bestehend aus einer Litze aus verseilten Einzeldrähten und insbesondere einem äußeren, den Heizleiter und die Fluidleitung umgebenden Schutzmantel.

Eine beheizte Medienleitung mit einer Rohrleitung und einem am Umfang der Rohrleitung angeordnetem Heizleiter, wobei die Rohrleitung und der Heizleiter gemeinsam von einer äußeren Umhüllung umschlossen sind, ist zum Beispiel aus der EP 2 137 449 B1 bekannt.

Weiterhin ist aus der WO 2013/026560 A1 eine beheizte Medienleitung bekannt, die Mittel zum Einschränken der axialen Dehnbarkeit aufweist. Ein Heizelement ist dabei insbesondere in Form zweier Litzen vorgesehen, die in die Schlauchwandung oder das Schlauchmaterial integriert werden können. Weiterhin wird ein als Wendel ausgebildeter Heizleiter mit einem Längsdehnungsverhinderungselement als Seele offenbart, wobei bis zu zehn Einzeldrähte als Bündel um die Seele herumgewickelt werden.

Für SCR-Leitungen muss im Personenkraftwagenbereich das Auftauen der Leitungen über einen großen Spannungsbereich gewährleistet werden. Beispielsweise das Auftauen einer Medienleitung bei Spannungen von 12 V bis 16 V bzw. 24 bis 32 V innerhalb einer kurzen Zeit bei sehr niedrigen Temperaturen, zum Beispiel bei 12 V innerhalb von 25 Minuten bei minus 30 °C. Für diese Anforderung wird eine gewisse Leistung benötigt, die aber wiederum bei 16 V und einer hohen Umgebungstemperatur, zum Beispiel Raumtemperatur, nicht zu einer Überhitzung der Medienleitung und weiterer Komponenten, die angeschlossen sind, führen darf. Um für eine solche Leitung die Leistung gut einstellen zu können, wird ein relativ exakter Widerstandswert benötigt, der wiederum für eine exakte Leitungslänge und einen begrenzten Längenbereich in Bezug auf diese Länge verwendet werden kann. Sollen mehrere unterschiedliche Leitungslängen genau für diese Leistung berechnet und aufgebaut werden, so müssen hierfür viele unterschiedliche Widerstandswerte für die Heizleiter verwendet werden, wobei der Widerstandswert für den Heizleiter in Ω/m gemessen wird.

Aus der DE 101 37 976 A1 sind elektrische Litzen für eine Sitzheizung eines Kraftfahrzeuges bekannt, bei der die einzelnen Adern der Litze aus Materialien mit unterschiedlichen spezifischen Widerständen bestehen, wobei reines Kupfer und eine Kupferlegierung, wie zum Beispiel CuSn6, verwendet werden.

Aus der US 2006/0289189 A1 ist ein Heizleiter aus elektrisch leitfähigen Faserbündeln bekannt. Die elektrisch leitfähigen Faserbündel werden mit einer isolierend wirkenden Harzbeschichtung beschichtet und als Heizdrähte eingesetzt. Mehrere derartig elektrisch leitfähige harzbeschichtete Faserbündel werden daraufhin zu einem elektrischen Heizleiter gebündelt. Die Faserbündel werden aus Einzelfasern gebildet und bestehen unter anderem aus den Werkstoffen Kupfer und Nickel-Chrom-Legierungen, die jeweils zusätzlich plattiert werden.

Aus der FR 1 126 046 A ist ein elektrischer Heizwiderstand bekannt, der aus mehreren verdrillten Einzeldrähten gebildet wird und bei dem die Einzeldrähte als Widerstandsdraht aus Reinnickel, Ferro-Nickel, Nickel-Kupfer und Nickel-Chrom bestehen können.

Der Widerstandswert eines Heizleiters kann durch Verwendung unterschiedlicher Legierungen und der Variation des Querschnitts eingestellt werden.

Eine weitere Anforderung bei SCR-Leitungen ist ein möglichst geringer Bauraum. Um den Bauraum zu minimieren, kann zum Beispiel der Außendurchmesser der Leitung und insbesondere der Außendurchmesser des äußeren Schutzmantels, der beispielsweise als Wellrohr ausgebildet ist, reduziert werden. Durch diese Reduzierung verringert sich der freie Raum zwischen der Fluidleitung und dem äußeren Schutzmantel. Um die Fluidleitung weiterhin mit Heizleitern zu beheizen, müsste der Außendurchmesser des Heizleiters in diesem Fall verringert werden. Durch die Verringerung des Heizleiteraußendurchmessers wird automatisch auch der zur Verfügung stehende Bereich für unterschiedliche Querschnitte zur Erzeugung unterschiedlicher Widerstandswerte eingeschränkt, und es lassen sich die benötigten Widerstandswerte nicht mehr exakt genug einstellen.

Der Erfindung liegt die Aufgabe zu Grunde, bei kleinen Litzen-Außendurchmessern, zum Beispiel im Bereich von 0,8 bis 1,5 mm, und bei einer hinreichenden Zugfestigkeit der Litze eine exakte Einstellung des Litzenwiderstandes in einen weiten Bereich zu ermöglichen und zudem die Herstellkosten zu reduzieren.

Erfindungsgemäß wird dies dadurch erreicht, dass die Litze aus mindestens sechs, um ein Stützelement verseilten Einzeldrähten besteht, von denen mindestens ein Einzeldraht aus einer CuNi-Legierung besteht, und die übrigen Einzeldrähte aus Cu oder einer NiCr-Legierung hergestellt sind, wobei alle Einzeldrähte denselben Drahtdurchmesser besitzen. Erfindungsgemäß bestehen somit die Einzeldrähte der Litze nicht mehr wie üblich aus dem gleichen Material, sondern aus unterschiedlichen Materialien und insbesondere aus einer Kupfer-Nickel-Legierung, aus Kupfer oder einer Nickel-Chrom-Legierung. Durch diese Variation können die Widerstände exakt genug eingestellt werden, so dass des Weiteren der Durchmesser der Einzeldrähte ebenfalls auf einen Durchmesser begrenzt werden kann. Hierdurch werden die Mengen für die jeweiligen Einzeldrähte pro verwendetes Material stark angehoben und die Varianten stark reduziert. Hieraus resultiert eine geringere Lagerhaltung der unterschiedlichen Einzeldrähte sowie eine erhöhte Gleichteilproduktion, wodurch die erfindungsgemäß verwendete Litze preiswerter hergestellt werden kann. Die Festlegung auf einen gleichen Durchmesser hat des Weiteren den Vorteil, dass in der Produktion der erfindungsgemäßen Medienleitung nur ein Querschnitt für die Kontaktierung und eine konstante Mantelstärke beim Abisolieren berücksichtigt werden müssen.

Erfindungsgemäß ist es weiterhin von Vorteil, wenn das Stützelement aus einem Kunststoffprofil mit einem dem Querschnitt der elektrischen Einzeldrähte entsprechenden Querschnitt besteht. Durch die Verwendung des Stützelementes aus Kunststoff, wobei beispielsweise ein zugfestes Material, wie Kevlar, Vectran® oder dergleichen verwendet werden kann, kann die Zugfestigkeit der verwendeten Litze wesentlich erhöht werden.

Erfindungsgemäß kann es vorteilhaft sein, wenn das Stützelement aus einem Einzeldraht gebildet wird, der einen gleich großen Querschnitt wie die übrigen Einzeldrähte besitzt, und der aus denselben Materialien wie einer oder mehrerer der übrigen Einzeldrähte besteht. Die zum Beispiel aus sechs, sieben, neunzehn oder siebenunddreißig Einzeldrähten gebildete Litze stellt einen optimalen Kompromiss zwischen möglichst dicken Einzeldrähten, einem konstanten kleinen Querschnitt, einem runden Aufbau und einem möglichst geringen Außendurchmesser dar. Ein runder Aufbau kann auch bei einer Litze aus neunzehn oder siebenunddreißig Einzeldrähten sichergestellt werden.

Durch die Erfindung ist es möglich, einen Querschnitt von 0,2 mm² für das verseilte Einzeldrahtbündel zu realisieren, und zwar in Verbindung mit einem bevorzugten Einzeldrahtdurchmesser von 0,19 mm bei sechs oder sieben Einzeldrähten. Gemäß der Erfindung kann es vorteilhaft sein, wenn ein Außendurchmesser der Litze von 1,10 mm realisiert ist. Bei der erfindungsgemäß vorhandenen Litze ist insbesondere eine Mindestwandstärke einer Litzenisolierung von 0,2 mm vorteilhaft. Nominal ist die Wandstärke vorzugsweise 0,265 mm.

Erfindungsgemäß ist es zweckmäßig, wenn der Widerstand jedes Einzeldrahtes derart gewählt ist, dass ein Gesamtwiderstand der Litze insbesondere von 0,097 bis 4,651 Ω/m und insbesondere ein Gesamtwiderstand von 0,097 bis 0,978 Ω/m sowie vorzugsweise von 0,119 bis 0,652 Ω/m vorhanden ist. Vorteilhafterweise werden als Kupfer-Nickel-Legierungen erfindungsgemäß für die Einzeldrähte folgende Werkstoffe verwendet:
CuNi1 mit einem spezifischen Widerstand von 0,0250,
CuNi2 mit einem spezifischen Widerstand von 0,0500,
CuNi6 mit einem spezifischen Widerstand von 0,1000,
CuNi10 mit einem spezifischen Widerstand von 0,1500,
CuNi15 mit einem spezifischen Widerstand von 0,2100,
CuNi23Mn mit einem spezifischen Widerstand von 0,3000,
CuNi30Mn mit einem spezifischen Widerstand von 0,4000 und
CuNi44 mit einem spezifischen Widerstand von 0,4900.

Hierbei wird der spezifische Widerstand in Ωmm²/m bei 20 °C gemessen. Zweckmäßigerweise wird als Nickel-Chrom-Legierung die Legierung NiCr3020 mit einem spezifischen Widerstand von 1,040 Ωmm²/m bei 20 °C verwendet.

Zweckmäßigerweise erfolgt in der erfindungsgemäßen Litze eine derartige Kombination der Einzeldrähte, dass der Abstand der spezifischen Widerstände der Einzeldrähte 0,008 bis 0,74 Ωmm²/m bei 20 °C beträgt.

Es ist von Vorteil, wenn das Gewicht des ummantelten Heizleiters 2 bis 4 g/m, bevorzugt 2,6 g/m beträgt. Vorzugsweise wird als Schutzmantel der erfindungsgemäßen Fluidleitung ein Wellrohr verwendet.

Weiterhin kann die erfindungsgemäße Medienleitung jeweils mindestens an einem Ende ein Verbinderstück aufweisen, das mit der Fluidleitung form- und/oder kraftschlüssig oder materialschlüssig verbunden ist, wobei am Umfang des Verbinderstücks der Heizleiter der Medienleitung fortgeführt ist oder als selbstständiges Heizelement aufgebracht ist.

Weiterhin bezieht sich die Erfindung auf einen elektrischen Heizleiter gemäß den vorbeschriebenen Merkmalen der erfindungsgemäßen Medienleitung.

Anhand des in den beiliegenden Zeichnungen dargestellten Ausführungsbeispiels wird die Erfindung näher erläutert.

Es zeigen:
- Fig. 1: einen teilweisen Längsschnitt durch eine erfindungsgemäße Medienleitung,
- Fig. 2: einen Querschnitt durch eine Litze mit sieben Einzeldrähten einer erfindungsgemäßen Medienleitung gemäß Fig. 1,
- Fig. 3: einen Querschnitt durch eine Litze gemäß der Erfindung mit 17 Einzeldrähten und
- Fig. 4: einen Querschnitt durch eine Litze gemäß der Erfindung mit 37 Einzeldrähten.

In den verschiedenen Figuren der Zeichnung sind gleiche Teile stets mit denselben Bezugszeichen versehen.

Zu der anschließenden Beschreibung wird ausdrücklich beansprucht, dass die Erfindung nicht auf alle oder mehrere Merkmale von beschriebenen Merkmalskombinationen beschränkt ist, vielmehr kann jedes einzelne Teilmerkmal des Ausführungsbeispiels auch losgelöst von allen anderen im Zusammenhang damit beschriebenen Teilmerkmalen für sich und auch in Kombination mit anderen Merkmalen sowie auch unabhängig von den Merkmalskombinationen und Rückbeziehungen der Ansprüche eine erfinderische Bedeutung in Verbindung mit dem Gegenstand des Anspruchs 1 haben.

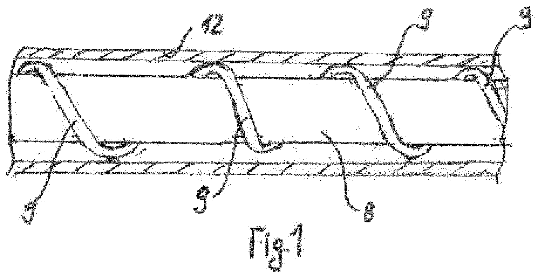

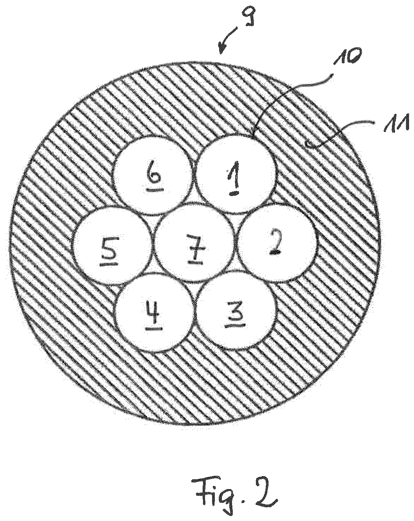

Wie in Figur 1 dargestellt ist, umfasst eine erfindungsgemäße Medienleitung eine innere, als Rohr- oder Schlauch ausgebildete Fluidleitung 8 und einen an deren Umfang angeordneten elektrischen Heizleiter 9, bestehend aus einer Litze 10 aus verseilten, zum Beispiel sieben Einzeldrähten 1-7, siehe Figur 2. Zweckmäßigerweise besitzt die Litze 10 eine die verseilten Einzeldrähte 1-7 umfassende elektrische Isolierung 11. Die Fluidleitung 8 mit dem am Umfang angeordneten Heizleiter 9 wird von einem äußeren Schutzmantel 12 umgeben, der beispielsweise als Wellrohr ausgebildet sein kann. Der Heizleiter 9 kann, wie dargestellt in Fig. 1, schraubenlinienförmig um die Fluidleitung 8 verlaufen. Er kann aber auch geradlinig parallel zur Fluidleitung 8 verlaufen.

Wie in Fig. 2 gezeigt ist, kann eine erfindungsgemäße Litze 10 aus sieben verseilten Einzeldrähten 1-7 bestehen, die alle denselben Durchmesser besitzen. Es liegt ebenfalls im Rahmen der Erfindung, wenn der mittlere Einzeldraht durch ein aus Kunststoff bestehendes Stützelement 7 ersetzt ist, das denselben Durchmesser wie die das Stützelement 7 umgebenden Einzeldrähte 1-6 besitzt.

Erfindungsgemäß ist vorgesehen, dass die Einzeldrähte 1-6 bzw. 1-7 derart materialmäßig hergestellt sind, dass mindestens einer der Einzeldrähte 1-6 bzw. 1-7 aus einer Kupfer-Nickel-Legierung besteht, und die übrigen Einzeldrähte entweder aus Kupfer oder aus einer Kupfer-Nickel-Legierung oder aus einer Nickel-Chrom-Legierung hergestellt sind.

Bei den in Figur 2 dargestellten Ausführungsbeispielen können die Einzeldrähte 1-7 entsprechend der folgenden Tabelle 1 materialmäßig ausgeführt sein:

**Tabelle 1**

| **Litze** | | **Draht 1** | **Draht 2** | **Draht 3** | **Draht 4** | **Draht 5** | **Draht 6** | **Draht 7** |
|---|---|---|---|---|---|---|---|---|
| | **R Ω/m** | **Material** | **Material** | **Material** | **Material** | **Material** | **Material** | **Material** |
| **Beispiel 1** | 0,097 | Cu | Cu | Cu | Cu | Cu | CuNi1 | CuNi1 |
| **Beispiel 2** | 0,119 | Cu | Cu | Cu | CuNi1 | CuNi1 | CuNi1 | CuNi6 |
| **Beispiel 3** | 0,436 | CuNi2 | CuNi2 | CuNi6 | CuNi6 | CuNi6 | CuNi10 | CuNi10 |
| **Beispiel 4** | 2,658 | CuNi30Mn | CuNi44 | CuNi44 | CuNi44 | CuNi44 | CuNi44 | NiCr3020 |
| **Beispiel 5** | 4,651 | CuNi44 | NiCr3020 | NiCr3020 | NiCr3020 | NiCr3020 | NiCr3020 | NiCr3020 |

In der Tabelle 2 sind weitere erfindungsgemäße Materialzusammenstellungen eines erfindungsgemäßen Heizleiters 9 aus sieben Einzeldrähten enthalten.

**Tabelle 2**

| **Litze** | | **Draht 1** | **Draht 2** | **Draht 3** | **Draht 4** | **Draht 5** | **Draht 6** | **Draht 7** |
|---|---|---|---|---|---|---|---|---|
| | **R Ω/m** | **Material** | **Material** | **Material** | **Material** | **Material** | **Material** | **Material** |
| **Beispiel 1** | 0,131 | Cu | Cu | Cu | CuNi1 | CuNi2 | CuNi2 | CuNi2 |
| **Beispiel 2** | 0,145 | CuNi1 | CuNi1 | CuNi1 | CuNi1 | CuNi1 | CuNi1 | CuNi6 |
| **Beispiel** 3 | 0,177 | CuNi1 | CuNi1 | CuNi1 | CuNi1 | CuNi2 | CuNi2 | CuNi15 |
| **Beispiel 4** | 0,198 | CuNi1 | CuNi1 | CuNi1 | CuNi1 | CuNi6 | CuNi10 | CuNi10 |
| **Beispiel 5** | 0,218 | CuNi1 | CuNi1 | CuNi2 | CuNi2 | CuNi2 | CuNi2 | CuNi10 |
| **Beispiel 6** | 0,242 | CuNi1 | CuNi2 | CuNi2 | CuNi2 | CuNi2 | CuNi2 | CuNi6 |
| **Beispiel 7** | 0,326 | CuNi2 | CuNi2 | CuNi2 | CuNi2 | CuNi2 | CuNi10 | CuNi15 |
| **Beispiel 8** | 0,397 | CuNi2 | CuNi2 | CuNi2 | CuNi6 | CuNi6 | CuNi10 | CuNi15 |

Zweckmäßigerweise ist der Durchmesser der sechs oder sieben Einzeldrähte 0,19 mm.

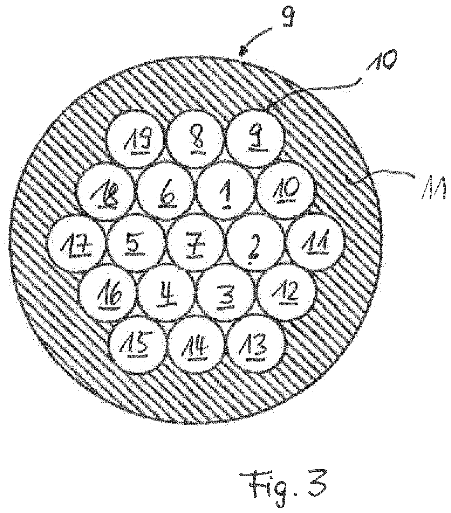

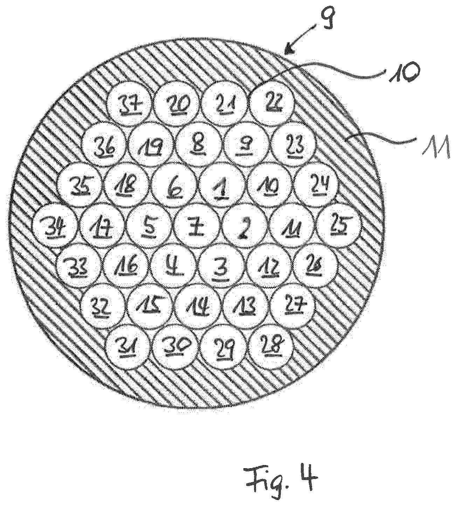

Es liegt im Rahmen der Erfindung, wenn der Heizleiter 9 aus einer Litze 10 gebildet wird, die aus neunzehn oder siebenunddreißig Einzeldrähten - siehe Fig. 3 und Fig. 4 - verseilt hergestellt ist, siehe beispielsweise Tabellen 3 und 4. Der Drahtdurchmesser der Einzeldrähte beträgt bei neunzehn Einzeldrähten vorzugsweise 0,115 mm und bei siebenunddreißig Einzeldrähten vorzugsweise 0,082 mm.

**Tabelle 3**

| | | **Beispiel 1** | **Beispiel 2** | **Beispiel 3** | **Beispiel 4** | **Beispiel 5** |
|---|---|---|---|---|---|---|
| **R Ω/m** | | 0,131 | 0,145 | 0,162 | 0,177 | 0,198 |
| **Draht 1** | **Material** | Cu | CuNi1 | Cu | CuNi1 | CuNi1 |
| **Draht 2** | **Material** | Cu | CuNi1 | CuNi1 | CuNi1 | CuNi1 |
| **Draht 3** | **Material** | Cu | CuNi1 | CuNi1 | CuNi1 | CuNi1 |
| **Draht 4** | **Material** | Cu | CuNi1 | CuNi1 | CuNi1 | CuNi1 |
| **Draht 5** | **Material** | Cu | CuNi1 | CuNi1 | CuNi1 | CuNi1 |
| **Draht 6** | **Material** | Cu | CuNi1 | CuNi1 | CuNi1 | CuNi1 |
| **Draht 7** | **Material** | Cu | CuNi1 | CuNi1 | CuNi1 | CuNi1 |
| **Draht 8** | **Material** | CuNi1 | CuNi1 | CuNi1 | CuNi1 | CuNi1 |
| **Draht 9** | **Material** | CuNi1 | CuNi1 | CuNi1 | CuNi1 | CuNi1 |
| **Draht 10** | **Material** | CuNi1 | CuNi1 | CuNi1 | CuNi1 | CuNi1 |
| **Draht 11** | **Material** | CuNi1 | CuNi1 | CuNi1 | CuNi2 | CuNi1 |
| **Draht 12** | **Material** | CuNi1 | CuNi1 | CuNi1 | CuNi2 | CuNi2 |
| **Draht 13** | **Material** | CuNi1 | CuNi1 | CuNi2 | CuNi2 | CuNi10 |
| **Draht 14** | **Material** | CuNi2 | CuNi1 | CuNi2 | CuNi2 | CuNi10 |
| **Draht 15** | **Material** | CuNi2 | CuNi1 | CuNi2 | CuNi2 | CuNi10 |
| **Draht 16** | **Material** | CuNi2 | CuNi1 | CuNi2 | CuNi2 | CuNi10 |
| **Draht 17** | **Material** | CuNi2 | CuNi2 | CuNi2 | CuNi2 | CuNi10 |
| **Draht 18** | **Material** | CuNi2 | CuNi2 | CuNi6 | CuNi2 | CuNi10 |
| **Draht 19** | **Material** | CuNi6 | CuNi6 | CuNi6 | CuNi10 | CuNi15 |

**Tabelle 4**

| | | **Beispiel 1** | **Beispiel 2** | **Beispiel 3** | **Beispiel 4** | **Beispiel 5** |
|---|---|---|---|---|---|---|
| **R Ω/m** | | 0,131 | 0,145 | 0,162 | 0,177 | 0,198 |
| **Draht 1** | **Material** | Cu | Cu | Cu | CuNi1 | CuNi1 |
| **Draht 2** | **Material** | Cu | CuNi1 | Cu | CuNi1 | CuNi1 |
| **Draht 3** | **Material** | Cu | CuNi1 | CuNi1 | CuNi1 | CuNi1 |
| **Draht 4** | **Material** | Cu | CuNi1 | CuNi1 | CuNi1 | CuNi1 |
| **Draht 5** | **Material** | Cu | CuNi1 | CuNi1 | CuNi1 | CuNi1 |
| **Draht 6** | **Material** | Cu | CuNi1 | CuNi1 | CuNi1 | CuNi1 |
| **Draht 7** | **Material** | Cu | CuNi1 | CuNi1 | CuNi1 | CuNi1 |
| **Draht 8** | **Material** | Cu | CuNi1 | CuNi1 | CuNi1 | CuNi1 |
| **Draht 9** | **Material** | Cu | CuNi1 | CuNi1 | CuNi1 | CuNi1 |
| **Draht 10** | **Material** | Cu | CuNi1 | CuNi1 | CuNi1 | CuNi1 |
| **Draht 11** | **Material** | Cu | CuNi1 | CuNi1 | CuNi1 | CuNi1 |
| **Draht 12** | **Material** | Cu | CuNi1 | CuNi1 | CuNi1 | CuNi1 |
| **Draht 13** | **Material** | Cu | CuNi1 | CuNi1 | CuNi1 | CuNi1 |
| **Draht 14** | **Material** | Cu | CuNi1 | CuNi1 | CuNi1 | CuNi1 |
| **Draht 15** | **Material** | CuNi1 | CuNi1 | CuNi1 | CuNi1 | CuNi2 |
| **Draht 16** | **Material** | CuNi1 | CuNi1 | CuNi1 | CuNi1 | CuNi2 |
| **Draht 17** | **Material** | CuNi1 | CuNi1 | CuNi1 | CuNi1 | CuNi2 |
| **Draht 18** | **Material** | CuNi1 | CuNi1 | CuNi1 | CuNi1 | CuNi2 |
| **Draht 19** | **Material** | CuNi1 | CuNi1 | CuNi1 | CuNi2 | CuNi2 |
| **Draht 20** | **Material** | CuNi1 | CuNi1 | CuNi1 | CuNi2 | CuNi2 |
| **Draht 21** | **Material** | CuNi1 | CuNi1 | CuNi1 | CuNi2 | CuNi2 |
| **Draht 22** | **Material** | CuNi1 | CuNi1 | CuNi1 | CuNi2 | CuNi2 |
| **Draht 23** | **Material** | CuNi1 | CuNi1 | CuNi1 | CuNi2 | CuNi2 |
| **Draht 24** | **Material** | CuNi1 | CuNi1 | CuNi1 | CuNi2 | CuNi2 |
| **Draht 25** | **Material** | CuNi1 | CuNi1 | CuNi1 | CuNi2 | CuNi2 |
| **Draht 26** | **Material** | CuNi1 | CuNi1 | CuNi2 | CuNi2 | CuNi2 |
| **Draht 27** | **Material** | CuNi2 | CuNi1 | CuNi2 | CuNi2 | CuNi2 |
| **Draht 28** | **Material** | CuNi2 | CuNi1 | CuNi2 | CuNi2 | CuNi2 |
| **Draht 29** | **Material** | CuNi2 | CuNi1 | CuNi2 | CuNi2 | CuNi2 |
| **Draht 30** | **Material** | CuNi2 | CuNi1 | CuNi2 | CuNi2 | CuNi2 |
| **Draht 31** | **Material** | CuNi2 | CuNi2 | CuNi2 | CuNi2 | CuNi2 |
| **Draht 32** | **Material** | CuNi2 | CuNi2 | CuNi6 | CuNi2 | CuNi2 |
| **Draht 33** | **Material** | CuNi2 | CuNi2 | CuNi6 | CuNi2 | CuNi2 |
| **Draht 34** | **Material** | CuNi6 | CuNi2 | CuNi6 | CuNi2 | CuNi2 |
| **Draht 35** | **Material** | CuNi6 | CuNi2 | CuNi10 | CuNi2 | CuNi6 |
| **Draht 36** | **Material** | CuNi6 | CuNi2 | CuNi10 | CuNi2 | CuNi6 |
| **Draht 37** | **Material** | CuNi6 | CuNi6 | CuNi10 | CuNi2 | CuNi10 |

Gemäß der Erfindung ist es vorteilhaft, wenn der Abstand des spezifischen Widerstandes der Einzeldrähte 0,008 bis 0,74 Ωmm²/m bei 20 °C beträgt. Das Gewicht der Gesamtleitung beträgt insbesondere 2 bis 4 g/m, bevorzugt 2,6 bis 2,8 g/m. Die Wandstärke der elektrischen Isolierung 11 der erfindungsgemäßen Litze 10 beträgt zweckmäßigerweise mindestens 0,20 mm, und insbesondere nominal 0,265 mm.

Durch die vorliegende Erfindung wird erreicht, dass die Einzeldrähte 1 bis 37 einer Litze 10 eines Heizleiters 9 alle denselben Durchmesser haben können. Zudem erlaubt die Erfindung eine exakte Einstellung des Gesamtwiderstandes einer Litze 10 bzw. des Heizleiters 9, so dass eine präzise Einstellung der erforderlichen Heizleistung möglich ist. Weiterhin werden durch die Erfindung die Produktions- und Lagerkosten verringert.

### Liste der Bezugszeichen

- 1 - 37: Einzeldrähte
- 7: Stützelement
- 8: Fluidleitung
- 9: Heizleiter
- 10: Litze
- 11: Isolierung
- 12: äußerer Schutzmantel

## Patentansprüche

1. Elektrischer Heizleiter (9) bestehend aus einer aus Einzeldrähten (1-37) hergestellten Litze (10), wobei die Einzeldrähte (1-37) gleiche und/oder unterschiedliche spezifische Widerstandswerte aufweisen, wobei die Einzeldrähte (1-37) zumindest teilweise aus einer Kupferlegierung bestehen,
**dadurch gekennzeichnet, dass** die Litze (10) aus mindestens sechs um ein Stützelement (7) verseilten Einzeldrähten (1-37) besteht, und die Einzeldrähte (1-37) einschließlich des Stützelementes (7) denselben Durchmesser besitzen, wobei als Kupferlegierung für mindestens einen der Einzeldrähte (1-37) eine Kupfer-Nickel-Legierung verwendet wird und die übrigen Einzeldrähte (1-37) aus Kupfer oder einer Nickel-Chrom-Legierung bestehen.

2. Elektrischer Heizleiter nach Anspruch 1,
**dadurch gekennzeichnet, dass** der Widerstand der Einzeldrähte (1-37) derart gewählt ist, dass ein Gesamtwiderstand der verseilten Litze (10) von 0,097 bis 4,651 Ω/m gegeben ist, vorzugsweise ist der Gesamtwiderstand 0,097 bis 0,978 Ω/m.

3. Elektrischer Heizleiter nach Anspruch 1 oder 2,
**dadurch gekennzeichnet, dass** das Stützelement (7) aus einem Kunststoffprofil mit einem dem Querschnitt der elektrischen Einzeldrähte (1-37) entsprechenden Querschnitt besteht.

4. Elektrischer Heizleiter nach Anspruch 1 oder 2,
**dadurch gekennzeichnet, dass** das Stützelement (7) aus einem Einzeldraht gebildet wird, der den gleich großen Querschnitt wie die übrigen Einzeldrähte (1-37) besitzt und aus demselben Material wie ein oder mehrere der Einzeldrähte (1-37) hergestellt ist.

5. Elektrischer Heizleiter nach einem der Ansprüche 1 bis 4,
**dadurch gekennzeichnet, dass** folgende Kupfer-Nickel-Legierungen für die Einzeldrähte (1-37) verwendet werden:
CuNi1 mit einem spezifischen Widerstand von 0,0250,
CuNi2 mit einem spezifischen Widerstand von 0,0500,
CuNi6 mit einem spezifischen Widerstand von 0,1000,
CuNi10 mit einem spezifischen Widerstand von 0,1500,
CuNi15 mit einem spezifischen Widerstand von 0,2100,
CuNi23Mn mit einem spezifischen Widerstand von 0,3000,
CuNi30Mn mit einem spezifischen Widerstand von 0,4000 und
CuNi44 mit einem spezifischen Widerstand von 0,4900,
wobei der spezifische Widerstand in Ωmm²/m bei 20 °C bestimmt ist.

6. Elektrischer Heizleiter nach Anspruch 4 oder 5,
**dadurch gekennzeichnet, dass** als Nickel-Chrom-Legierung für die Einzeldrähte (1-37) die Legierung NiCr3020 mit einem spezifischen Widerstand von 1,040 Ωmm²/m bei 20 °C verwendet wird.

7. Elektrischer Heizleiter nach einem der Ansprüche 1 bis 6,
**dadurch gekennzeichnet, dass** der Abstand des spezifischen Widerstandes der Einzeldrähte (1-37) 0,008 bis 0,74 Ωmm²/m bei 20 °C beträgt.

8. Elektrischer Heizleiter nach einem der Ansprüche 1 bis 7,
**dadurch gekennzeichnet, dass** der Durchmesser der sechs oder sieben Einzeldrähte (1-7) der Litze (10) 0,19 mm beträgt.

9. Elektrischer Heizleiter nach einem der Ansprüche 1 bis 7,
**dadurch gekennzeichnet, dass** die Litze (10) aus neunzehn Einzeldrähten (1-19) mit einem Durchmesser von 0,115 mm oder siebenunddreißig Einzeldrähten (1-37) mit einem Durchmesser von 0,082 mm besteht.

10. Elektrischer Heizleiter nach einem der Ansprüche 1 bis 9,
**dadurch gekennzeichnet, dass** der Heizleiter (9) eine Litzenisolierung (11) mit einer Mindestwanddicke von 0,2 mm besitzt.

11. Elektrischer Heizleiter nach Anspruch 10,
**dadurch gekennzeichnet, dass** der Außendurchmesser des isolierten Heizleiters (9) 1,1 mm beträgt.

12. Elektrischer Heizleiter nach einem der Ansprüche 10 bis 11,
**dadurch gekennzeichnet, dass** das Gewicht des isolierten Heizleiters (9) 2 g/m bis 4 g/m, bevorzugt 2,6 g/m beträgt.

13. Beheizte Medienleitung umfassend eine innere rohr- oder schlauchförmige Fluidleitung (8) und mindestens einen an deren Umfang angeordneten elektrischen Heizleiter (9),
**gekennzeichnet durch** einen Heizleiter gemäß den Merkmalen eines oder mehrerer der Ansprüche 1 bis 12.

14. Medienleitung nach Anspruch 13,
**gekennzeichnet durch** einen äußeren, den Heizleiter (9) und die Fluidleitung (8) umgebenden Schutzmantel (12).

15. Medienleitung nach Anspruch 14,
**dadurch gekennzeichnet, dass** der äußere Schutzmantel (12) als Wellrohr ausgebildet ist.

16. Medienleitung nach einem der Ansprüche 13 bis 15,
**dadurch gekennzeichnet, dass** ein Ende der Medienleitung mindestens mit einem Verbinderstück form- und/oder kraftschlüssig oder stoffschlüssig verbunden ist, wobei das Verbinderstück am Umfang mit einem Heizleiter (9) gemäß einem der Ansprüche 1 bis 12 umgeben ist.

## Claims

1. An electric heat conductor (9) consisting of a braid (10) manufactured from individual wires (1-37), wherein the individual wires (1-37) have identical and/or different specific resistance values, wherein the individual wires (1-37) are at least partially made from a copper alloy,
**characterized in that** the braid (10) consist of at least six individual wires (1-37) wrapped around a support element (7), and the individual wires (1-37) including the support element (7) have the same diameter, wherein a copper-nickel alloy is used as copper alloy for at least one of the individual wires (1-37) and the other individual wires (1-37) are made from copper or a nickel-chromium alloy.

2. Electric heat conductor according to claim 1,
**characterized in that** the resistance of the individual wires (1-37) is selected so that a total resistance of the wrapped braid (10) of 0.097 to 4.651 Ω/m is given; the total resistance is preferably 0.097 to 0.978 Ω/m.

3. Electric heat conductor according to claim 1 or 2,
**characterized in that** the support element (7) consists of a plastic profile having a cross section corresponding to the cross section of the electrical individual wires (1-37).

4. Electric heat conductor according to claim 1 or 2,
**characterized in that** the support element (7) is formed by an individual wire that has the same size cross section as the other individual wires (1-37) and is manufactured from the same material as one or more of the individual wires (1-37).

5. Electric heat conductor according to one of claims 1 to 4, **characterized in that** the following copper-nickel alloys are used for the individual wires (1-37):
CuNi1 having a specific resistance of 0.0250,
CuNi2 having a specific resistance of 0.0500,
CuNi6 having a specific resistance of 0.1000,
CuNi10 having a specific resistance of 0.1500,
CuNi15 having a specific resistance of 0.2100,
CuNi23Mn having a specific resistance of 0.3000,
CuNi30Mn having a specific resistance of 0.4000, and
CuNi44 having a specific resistance of 0.4900,
wherein the specific resistance in Ωmm²/m is determined at 20 °C.

6. Electric heat conductor according to claim 4 or 5,
**characterized in that** the alloy NiCr3020 having a specific resistance of 1.040 Ωmm²/m at 20 °C is used as the nickel-chromium alloy for the individual wires (1-37).

7. Electric heat conductor according to one of claims 1 to 6,
**characterized in that** the distance of the specific resistance of the individual wires (1-37) is 0.008 to 0.74 Ωmm²/m at 20 °C.

8. Electric heat conductor according to one of claims 1 to 7,
**characterized in that** the diameter of the six or seven individual wires (1 - 7) of the braid (10) is 0.19 mm.

9. Electric heat conductor according to one of claims 1 to 7,
**characterized in that** the braid (10) consists of nineteen individual wires (1-19) having a diameter of 0.115 mm, or thirty-seven individual wires (1-37) having a diameter of 0.082 mm.

10. Electric heat conductor according to one of claims 1 to 9,
**characterized in that** the heat conductor (9) has a braid insulation (11) having a minimum wall thickness of 0.2 mm.

11. Electric heat conductor according to claim 10,
**characterized in that** the outer diameter of the insulated heat conductor (9) is 1.1 mm.

12. Electric heat conductor according to one of claims 10 to 11,
**characterized in that** the weight of the insulated heat conductor (9) is 2 g/m to 4 g/m, preferably 2.6 g/m.

13. A heated media line comprising and inner tubular or hose-shaped fluid line (8) and at least one electric heat conductor (9) arranged over its circumference,
**characterized by** a heat conductor according to the characteristics of one or more of the claims 1 to 12.

14. The media line according claim 13,
**characterized by** an outer protective sheath (12) surrounding the heat conductor (9) and the fluid line (8).

15. The media line according to claim 14,
**characterized in that** the outer protective sheath (12) is configured as a corrugated tube.

16. The media line according to one of claims 13 to 15,
**characterized in that** one end of the media line is connected to at least one connector piece in a positive and/or non-positive or in a material-locking manner, wherein the circumference of the connector piece is encased by a heat conductor (9) according to one of claims 1 to 12.

## Revendications

1. Conducteur chauffant (9) électrique, composé d'un toron (10) fabriqué à partir de fils individuels (1-37), les fils individuels (1-37) possédant des valeurs de résistivité identiques et/ou différentes, les fils individuels (1-37) se composant au moins partiellement d'un alliage de cuivre, **caractérisé en ce que** le toron (10) se compose d'au moins six fils individuels (1-37) câblés autour d'un élément support (7), et les fils individuels (1-37) incluant l'élément support (7) possèdent le même diamètre, l'alliage de cuivre utilisé pour au moins l'un des fils individuels (1-37) étant un alliage de cuivre-nickel et les autres fils individuels (1-37) se composant de cuivre ou d'un alliage de nickel-chrome.

2. Conducteur chauffant électrique selon la revendication 1, **caractérisé en ce que** la résistance des fils individuels (1-37) est choisie de telle sorte qu'une résistance totale du toron (10) câblé de 0,097 à 4,651 Ω/m est obtenue, la résistance totale est de préférence de 0,097 à 0,978 Ω/m.

3. Conducteur chauffant électrique selon la revendication 1 ou 2, **caractérisé en ce que** l'élément support (7) se compose d'un profilé en matière plastique ayant une section transversale correspondant à la section transversale des fils individuels (1-37) électriques.

4. Conducteur chauffant électrique selon la revendication 1 ou 2, **caractérisé en ce que** l'élément support (7) est formé à partir d'un fil individuel qui possède une section transversale de taille égale à celle des autres fils individuels (1-37) et qui est fabriqué à partir du même matériau qu'un ou plusieurs des fils individuels (1-37).

5. Conducteur chauffant électrique selon l'une des revendications 1 à 4, **caractérisé en ce que** les alliages de cuivre-nickel suivants sont utilisés pour les fils individuels (1-37) :
CuNi1 avec une résistivité de 0,0250,
CuNi2 avec une résistivité de 0,0500,
CuNi6 avec une résistivité de 0,1000,
CuNi10 avec une résistivité de 0,1500,
CuNl15 avec une résistivité de 0,2100,
CuNi23Mn avec une résistivité de 0,3000,
CuNi30Mn avec une résistivité de 0,4000 et
CuNi44 avec une résistivité de 0,4900,
la résistivité étant définie en Ωmm²/m à 20 °C.

6. Conducteur chauffant électrique selon la revendication 4 ou 5, **caractérisé en ce que** l'alliage de nickel-chrome utilisé pour les fils individuels (1-37) est l'alliage NiCr3020 avec une résistivité de 1,040 Ωmm²/m à 20 °C.

7. Conducteur chauffant électrique selon l'une des revendications 1 à 6, **caractérisé en ce que** l'écart de résistivité des fils individuels (1-37) est de 0,008 à 0,74 Ωmm²/m à 20 °C.

8. Conducteur chauffant électrique selon l'une des revendications 1 à 7, **caractérisé en ce que** le diamètre de six ou sept fils individuels (1-7) du toron (10) est de 0,19 mm.

9. Conducteur chauffant électrique selon l'une des revendications 1 à 7, **caractérisé en ce que** le toron (10) se compose de dix-neuf fils individuels (1-19) ayant un diamètre de 0,115 mm ou de trente-sept fils individuels (1-37) ayant un diamètre de 0,082 mm.

10. Conducteur chauffant électrique selon l'une des revendications 1 à 9, **caractérisé en ce que** le conducteur chauffant (9) possède une isolation de toron (11) ayant une épaisseur de paroi minimale de 0,2 mm.

11. Conducteur chauffant électrique selon la revendication 10, **caractérisé en ce que** le diamètre extérieur du conducteur chauffant (9) isolé est de 1,1 mm.

12. Conducteur chauffant électrique selon l'une des revendications 10 et 11, **caractérisé en ce que** le poids du conducteur chauffant (9) isolé est de 2 g/m à 4 g/m, de préférence égal à 2,6 g/m.

13. Conduite à fluide chauffée comprenant une conduite fluidique (8) intérieure en forme de tube ou de tuyau et au moins un conducteur chauffant (9) électrique disposé au niveau de son pourtour,
**caractérisée par** un conducteur chauffant conformément aux caractéristiques selon l'une ou plusieurs des revendications 1 à 12.

14. Conduite à fluide selon la revendication 13,
**caractérisée par** une enveloppe de protection (12) extérieure qui entoure le conducteur chauffant (9) et la conduite fluidique (8).

15. Conduite à fluide selon la revendication 14,
**caractérisée en ce que** l'enveloppe de protection (12) extérieure est réalisée sous la forme d'un tube ondulé.

16. Conduite à fluide selon l'une des revendications 13 à 15, **caractérisée en ce qu'**une extrémité de la conduite à fluide est reliée par complémentarité de formes et/ou par assemblage de force ou par fusion de matières à au moins une pièce de liaison, la pièce de liaison étant entourée sur son pourtour par un conducteur chauffant (9) selon l'une des revendications 1 à 12.
